(19) Europäisches Patentamt
European Patent Office
Office européen des brevets

(11) **EP 0 886 244 B1**

(12) **EUROPEAN PATENT SPECIFICATION**

(45) Date of publication and mention
of the grant of the patent:
**12.02.2003 Bulletin 2003/07**

(51) Int Cl.$^{7}$: **G06T 15/10**

(21) Application number: **98304602.0**

(22) Date of filing: **10.06.1998**

(54) **Image composition and information processing**

Bildkomposition und Informationsverarbeitung

Composition d'image et traitement d'information

(84) Designated Contracting States:
**BE CH DE DK ES FI FR GB IT LI NL SE**

(30) Priority: **16.06.1997 JP 15888197**

(43) Date of publication of application:
**23.12.1998 Bulletin 1998/52**

(73) Proprietor: **Sony Computer Entertainment Inc.
Tokyo 107-0052 (JP)**

(72) Inventor: **Oka, masaaki , c/o Sony Corporation
Shinagawa-ku, Tokyo 141 (JP)**

(74) Representative: **Cotter, Ivan John et al
D. YOUNG & CO.
21 New Fetter Lane
London EC4A 1DA (GB)**

(56) References cited:
**EP-A- 0 211 532          US-A- 5 557 339**

- **PATENT ABSTRACTS OF JAPAN vol. 096, no.
008, 30 August 1996 & JP 08 102895 A (SANYO
ELECTRIC CO LTD), 16 April 1996**

EP 0 886 244 B1

**Description**

The present invention relates to mixing a plurality of images to compose a new image, and to information processing systems.

In a graphic computer, entertainment apparatus, video apparatus, etc., a plurality of images is mixed using a mixing ratio information to compose a new image.

For composition of a new image from a mixture of a plurality of images, it has been proposed to prepare a key signal using an information called "alpha information" supplied separately from the plurality of images, and also to use as a key signal a specific pixel value included in an image.

The alpha information is a two-dimensional information having a same resolution as an image and a value ranging from 0 to 1. For example, when the resolution of an image is 640 x 480, the alpha information has a resolution of 640 x 480. Also, when bits indicating an alpha information count two in number, for example, the alpha information can take four kinds of values 0, 0.33, 0.66 and 1.0.

Assume here that a first image includes a portion having a pixel value (R1, G1, B1), and a second image includes a portion having a pixel value (R2, G2, B2) corresponding to that portion of the first image. Also assume that an alpha information for these first and second images takes a value A. Then, a pixel value of an image composed from a mixture of the first and second images is calculated as in the following:

$$A*(R1, G1, B1) + (1 - A)*(R2, G2, B2)$$

$$= \{(A*R1 + (1-A)*R2), (A*G1 + (1- A)*G2),$$

$$(A*B1 + (1 - A)*B2)\} \tag{1}$$

$$A*(R1, G1, B1) + (R2, G2, B2)$$

$$= \{(A*R1 + R2), (A*G1 + G2), (A*B1 + B2)\} \tag{2}$$

$$(R1, G1, B1) + (1 - A)* (R2, G2, B2)$$

$$= \{(R1 + (1 - A)*R2), (G1 + (1- A)*G2),$$

$$(B1 + (1 - A)*B2)\} \tag{3}$$

Next, a method of mixing two images using the above-mentioned alpha information to compose a new image will be discussed below:

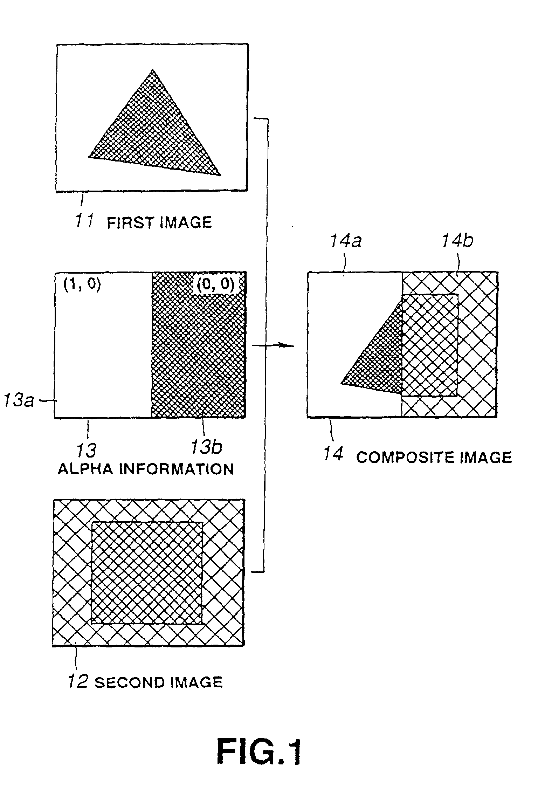

FIG. 1 shows how a first image 11 and a second image 12 are mixed using an alpha information 13 supplied separately from these images 11 and 12 to generate a composite image 14.

In this example, the alpha information 13 consists of a left half 13a having a value of 0.0 and a right half 13b having a value of 1.0. Therefore, the composite image 14 generated by mixing the first and second images 11 and 12 using the alpha information 13 as a key signal consists of a left half 14a corresponding to the left half of the first image 11 and a right half 14b corresponding to the right half of the second image 12.

A pixel value of the composite image 14 is calculated using the formula (1) above. A pixel value of the left half 14a is expressed by a following relation (4a) while a one of the right half 14b is expressed by a following relation (4b).

$$1*(R1, G1, B1) + 0*(R2, G2, B2) = (R1, G1, B1) \tag{4a}$$

$$0*(R1, G1, B1) + 1*(R2, G2, B2) = (R2, G2, B2) \tag{4b}$$

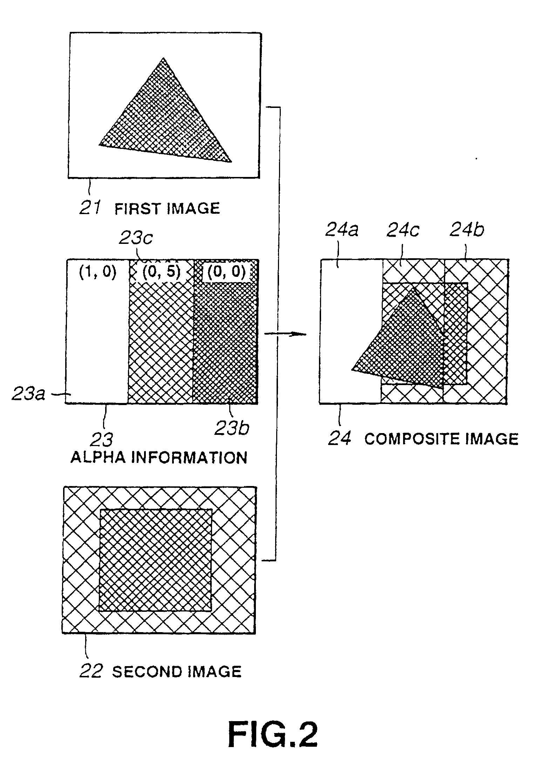

FIG. 2 shows how a first image 21 and a second image 22 are mixed using a different alpha information 23 from the alpha information 13 in the above example to produce a composite image 24.

In this example, the alpha information 23 consists of a left one-third portion 23a having a value of 0.0, a right one-third portion 23b having a value of 1, and a central one-third portion 23c having a value of 0.5.

The composite image 24 generated from the first image 21 and second image 22 mixed together using the alpha information 23 as a key signal, consists of a left one-third portion 24a resulting from a left one-third portion of the first image 21, a right one-third portion 24b resulting from a right one-third portion of the second image 22, and a central one-third portion 24c resulting from a superposition of the central one-third portion of the first image 21 and that of the second image 22.

A pixel value of this composite image 24 is calculated using the formula (1) above. A pixel value of the left one-third portion 24a of the composite image 24 is expressed by a following relation (5a), a pixel value of the right one-third portion 24b is by a following relation (5b), and a pixel value of the central one-third portion 24c is by a following relation (5c):

$$1*(R1, G1, B1) + 0*(R2, G2, B2) = (R1, G1, B1) \tag{5a}$$

$$0*(R1, G1, B1) + 1*(R2, G2, B2) = (R2, G2, B2) \tag{5b}$$

$$0.5*(R1, G1, B1) + 0.5*(R2, G2, B2) \tag{5c}$$

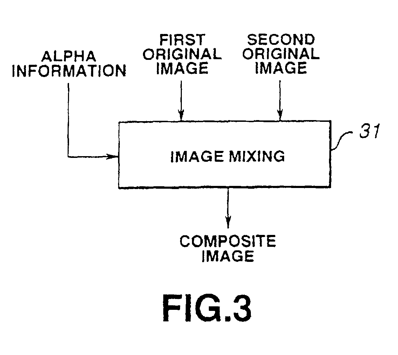

FIG. 3 shows an example of the configuration of an image mixing circuit adapted to mix two images using an alpha information to compose a new image. The image mixing circuit is indicated with a reference 31. It is supplied with a first image and a second image, and an alpha information which will be a key signal which defines portions of the first and second images to be mixed and a ratio at which the first and second images are mixed. According to the alpha information, the first and second images are mixed together to produce a composite image.

Mixing such two images using an alpha information in this image mixing circuit 31 will further be described later.

Next, how to generate a key signal from an image portion having a specific color to mix two images to produce a composite image from them, will be described below:

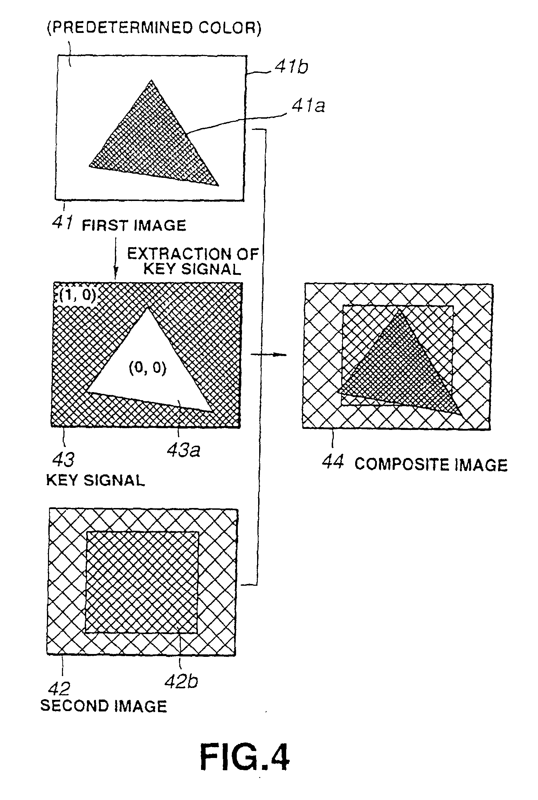

FIG. 4 schematically shows how a key signal 43 is generated from a specific color included in a first image 41 and used to mix the first image 41 and a second image 42 together to produce a composite image 44.

The first image 41 consists of a triangular portion 41a having a certain color and a portion 41b surrounding the triangular portion 41a and having a specific color, and will be a foreground of the composite image 44, and the second image 42 will form a background of the composite image 44. It includes a square portion 42b having a certain color. The key signal 43 is a signal acquired through extraction, from the first image 41, of only the portion 41b of which the pixel value provides the specific color.

The composite image 44 formed from mixing of the first and second images 41 and 42 using the key signal 43, is a superposition of the triangular portion 41a of the first image 41 on the second image 42.

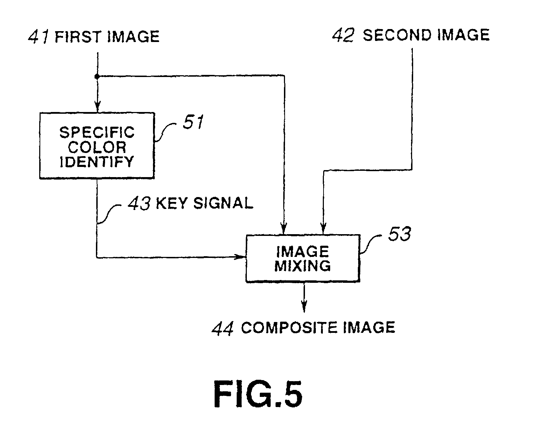

FIG. 5 shows an example of the configuration of the image mixing circuit in which the key signal 43 extracted from the specific color included in the first image 41 is used to mix the first and second images 41 and 42 to form the composite image 44.

In a specific color identify circuit 51, it is judged that the pixel of the first image (original image) 41 provides a specific color, and only an image portion of which the pixel value provides the specific color is extracted to generate the key signal 43. The key signal 43 thus produced is supplied to an image mixing circuit 53.

In the image mixing circuit 53, portions of the first image (original) 41 and second image 42 that are to be mixed and a mixing ratio are determined based on the key signal 43 supplied from the specific color identify circuit 51 to produce the composite image 44 which are delivered to outside.

By any of the aforementioned image composing methods, it is possible to produce a so-called "clear void image" by superposing two images one on the other with a portion of the original image processed to have a clear color.

However, the image composing method using an alpha information is not advantageous in that a separate information from original images should be additionally used. Also, the image composing method using a key signal extracted from an image with a clear color taken as a specific color is disadvantageous in that the quality of a composite image formed from a plurality of images mixed using such a key signal is deteriorated when the original image is subjected to an image processing such a low-pass filtering.

According to one aspect of the invention there is provided an image composing method in which a first image and a second image are mixed using a key information to compose a new image, comprising a key information generating step of generating a key information from a specific color of the first original image; a first image processing step of subjecting the first original image to a predetermined image processing; a second image processing step of subjecting the generated key information to the image processing; and an image mixing step of mixing the processed first image and the second original image together using the processed key information.

According to another aspect of the invention there is provided an image composing apparatus in which a first image and a second image are mixed using a key information to compose a new image, comprising means for generating a key information from a specific color of the first original image; means for subjecting the first original image and the generated key information to a predetermined image processing; and means for mixing the processed first image and the second original image together using the processed key information.

According to a further aspect of the invention there is provided information processing system in which an image data is generated based on a control information supplied from an input device and displayed as an image on a display unit, comprising means for generating a key information from a specific color of a first original image; means for subjecting the first original image and generated key information to a predetermined image processing; and means for mixing the processed first original image and a second original image together using the processed key information.

According to a preferred form of implementation of the invention described hereinbelow, an image composing method and apparatus, and an information processing system including the method and apparatus, are provided which need no such additional special information as the alpha information and in which a composite image will not be deteriorated in quality even if an original image is subjected to image processing.

The preferred form of implementation of the invention seeks to overcome the above-mentioned drawbacks of the prior art by providing a method and apparatus for composing a new image by mixing a plurality of images together, and an information processing system incorporating the method and apparatus, which need no such additional information as the alpha information and in which a composite image thus produced will not be deteriorated in quality even if an original image for the composite image is subjected to an image processing.

For an example of the prior art see EP-A-0 211 532.

The invention will now be further described, by way of illustrative and nonlimiting example, with reference to the accompanying drawings, in which:

FIG. 1 schematically shows how a first image and a second image are mixed using an alpha information supplied separately from the images to compose a new image;
FIG. 2 schematically shows how a first image and a second image are mixed using a different alpha information from the one in FIG. 1 to produce a composite image;
FIG. 3 is a schematic block diagram of an example of the configuration of an image mixing circuit adapted to mix two images using an alpha information to form a composite image;
FIG. 4 schematically shows how a key signal extracted from a specific color included in a first image is used to mix the first image and a second image in order to compose a new image;
FIG. 5 is a schematic block diagram of an example of the configuration of the image mixing circuit in which a key signal extracted from a specific color included in a first image is used to mix the first image and a second image to form the composite image;
FIG. 6 schematically shows how a clear color is used as a specific color to generate a "clear void image";
FIG. 7 schematically shows how a key signal extracted from a first image subjected to image processing is used to mix a first image and a second image to compose a new image;
FIG. 8 is a schematic block diagram of an example of the basic configuration of the image composing apparatus in which a "clear void image" is produced;
FIG. 9 shows an embodiment of the image composing method according to the present invention;
FIG. 10A is a schematic block diagram of an embodiment of the image composing apparatus according to the present invention; and
FIG. 10B is a schematic block diagram of an embodiment of the information processing system (entertainment system) according to the present invention.

Before proceeding the description of the embodiments of the present invention, the generation of a key signal with a clear color taken as a specific color will be described which is the base for the image composing method and apparatus, and the information processing system, according to the embodiments of the invention.

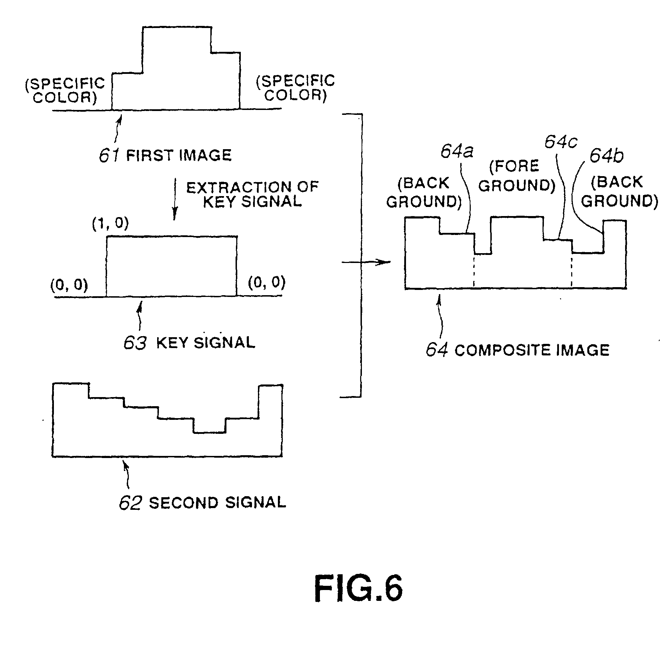

FIG. 6 schematically shows how a clear color is used as a specific color to produce a "clear void image". For the simplicity of the illustration and description, the following description will be given using a one-dimensional graphic image will be used for the convenience of the explanation.

A first image 61 is shown which will form a foreground of a composite image 64, and a second image 62 is also shown which will be a background of he composite image 64. Also a key signal 63 is shown which provides a shift between an image being the foreground of the composite image 64 and an image being the background when a portion of the first image 61 having a specific color (of which the pixel value is 0, for example) is taken as a clear color. The key signal 63 has a value of 0.0 in the portion of the first image 64 having the specific color, and a value of 1.0 in the rest of the first image 61 having not the specific color, as will be seen from FIG. 6.

The composite image 64 is formed by mixing the first and second images 61 and 62 using the key signal 63.

However, the quality of an image composed using the first original image, if subjected to an image processing, may possibly be deteriorated as having previously been described.

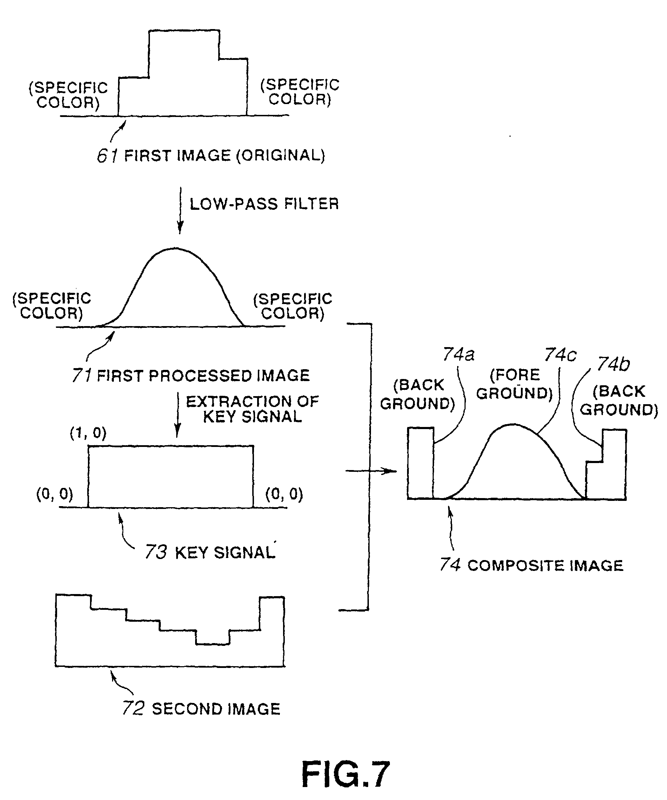

FIG. 7 schematically shows how a composite image is produced as in FIG. 6 after the first original image 61 in FIG. 6 is subjected to a low-pass filtering (will be referred to simply as "filtering" hereinafter).

In FIG. 7, a processed first image 71 is shown which will form a foreground of a composite image 74, and a second image 72 is also shown which will form a background of the composite image 74.

The processed first image 71 is a first original image 61 having been subjected to a filtering. A key signal 73 is also shown which provides a shift between the foreground image 71 of the composite image 74 and the background image 72. The key signal 73 is generated from the processed first image 71. Thus, the key signal 73 defines a portion of the processed first image 71 being the foreground of the composite image 74 and of which the pixel value provides a specific color, and the range of definition by the key signal 73 is wider than that by the aforementioned key signal 63 generated directly from the first original image 61.

The composite image 74 is an image produced by mixing the filtered first image 71 and the second original image 72 using the key signal 73.

Owing to the filtering, the first image 71 has a portion showing an intermediate pixel value nearly same as that for the specific color but not exactly any pixel value for the specific color. Thus, a portion of the composite image 74 will have a color nearly same as the specific color (clear color) which does not appear in the aforementioned composite image 64. That is to say, a key signal generated from an original image having been filtered for mixing original images will define a wrong shift point for the images which are to be mixed together, which will result in an image quality deterioration such as color bleeding, etc.

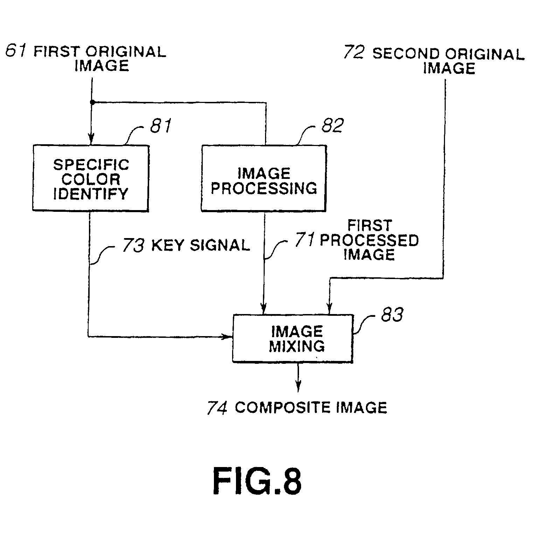

FIG. 8 is a schematic block diagram of an example of the basic configuration of the image composition apparatus in which a "clear void image" is produced according to the present invention. This image composing apparatus uses the above-mentioned clear color as the specific color.

On the assumption that the specific color is (R0, G0, B0) and the first original image has another color (R1, G1, B1). Then, the filtered first original image is expressed by a following formula:

$$p*(R0, G0, B0) + q*(R1, G1, B1) \ (p, q \neq 0) \tag{6}$$

A composite image produced from a mixture of the processed first original image expressed by the formula (6) and a second original image having a color (R2, G2, B2) is expressed by a following formula:

$$s*\{p*(R0, G0, B0) + q*(R1, G1,, B1)\} + t*(R2, G2, B2)$$

$$= s*p*(R0, G0, B0) + s*q*(R1, G1, B1) + t*(R2, G2, B2)$$

$$(s \ t \neq 0) \tag{7}$$

As seen from the relation (7), when the specific color (R0, G0, B0) is other than (0, 0, 0), namely, when it is not black, the specific color will bleed into the foreground and background of a composite image.

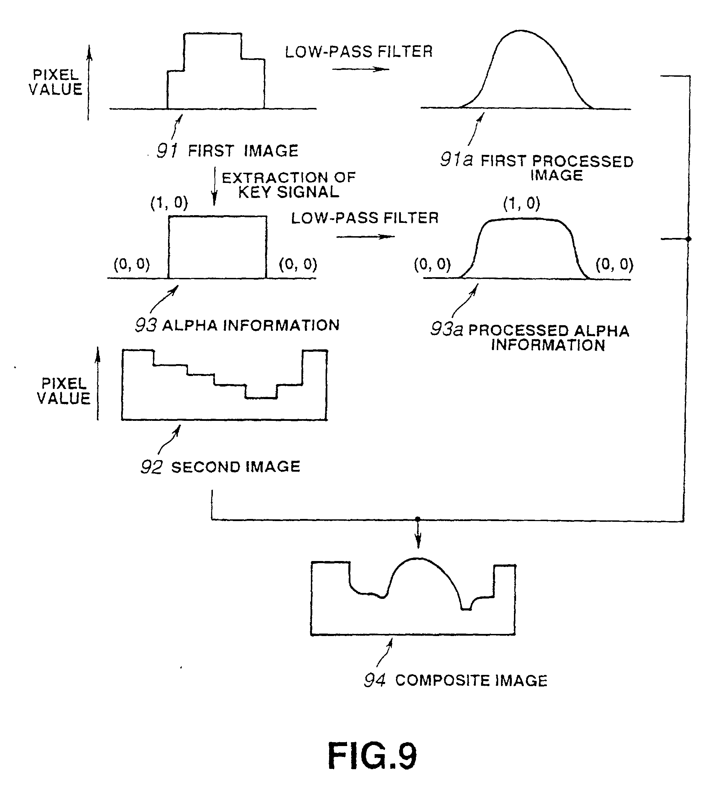

Next, preferred embodiments of the image composing method and apparatus according to the present invention, based on the image composing method and apparatus having been described in the foregoing, will be described with reference to FIG. 9.

FIG. 9 shows how to produce a "clear void image" in a preferred embodiment of the image composing method according to the present invention.

A first image (original) 91 is shown which is processed to be a processed first image 91a. For this image processing, a filtering or the like is used for a smooth joining between images.

Also an alpha information 93 is shown which is a key signal extracted from the first original image 91 on the basis of a specific color. The value of this alpha information 93 is 0 in a portion of the first original image 91 having the specific color, and 1 in the other portion of the first image 91. The alpha information 93 is subjected to a same image processing as done for the first original image 91 to provide a processed alpha information 93a.

A composite image 94 is also shown which is formed by mixing the processed first original image 91 and a second original image 92 using the processed alpha information 43a. This image composition is done using the previously mentioned formula (3).

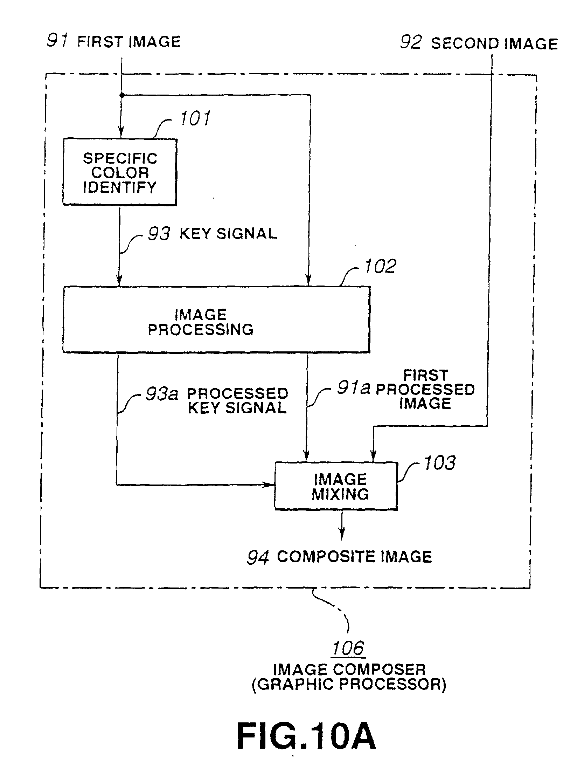

FIG. 10A is a schematic block diagram of an embodiment of the image composing apparatus adapted to carry out the aforementioned image composing method embodying the present invention. It should be appreciated that the image composing apparatus of the present invention can be embodied using semiconductors, integrated circuits, dis-

**EP 0 886 244 B1**

crete circuits using a plurality of transistors, or a CPU board.

A first image (original) 91 is supplied to a specific color identify circuit 101 and image processing circuit 102.

The specific color identify circuit 101 identifies a specific color of the first original image 91 to generate a key signal 93.

The image processing circuit 102 subjects the first original image 91 and key signal 93 to a same image processing. The first original image 91 thus processed is taken as a processed first image 91a, and the key signal 93 thus subjected to the signal processing is taken as a processed key signal 93a. This image processing effected here is a filtering or the like.

When each of components R, G and B of a pixel color of the first original image 91 is expressed with 8 bits, the processed key signal 93 is also extended to 8 bits. Also, the 8-bit key signal 93 is subjected, as an alpha information, to a same image processing as for each component (R, G, B) of the first original image 91 to generate the processed key information (alpha information) 93a as mentioned above. The processed first image 91a and processed key signal 93a are supplied to an image mixing circuit 103.

Tile image mixing circuit 103 mixes the processed first image 91a and second original image 92 together using the processed key signal 93a to form a composite image. At this time, if a pixel value (R0, G0, B0) = (0, 0, 0) is selected for a specific color, namely, if black is selected as the specific color, the previously mentioned relation (4) can be expressed in the form (8) as shown below. Further, when it is assumed that s = 1 and t = 1 - q for using the formula (3), the relation (8) below can be expressed as a following formula (9). That is to say, only the foreground and background can be mixed.

$$s*\{p*(0, 0, 0) + q*(R1, G1, B1)\} + t*(R2, G2, B2)$$

$$= s*q*(R1, G1, B1) + t*(R2, G2, B2) \tag{8}$$

$$= q*(R1, G1, B1) + (1 - q)*(R2, G2, B2) \tag{9}$$

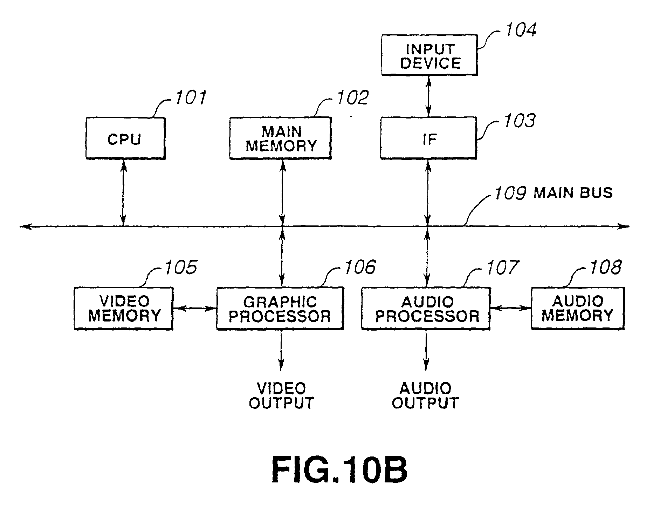

FIG. 10B is a schematic block diagram of an embodiment of the information processing system (entertainment system) according to the present invention, incorporating the image composing apparatus having been described in the foregoing. Such an entertainment system can display a three-dimensional image with a high accuracy and at a high speed.

As shown in FIG. 10B, the information processing system or entertainment system comprises a CPU (central processing unit) 101 which calculates a vertex coordinate of a triangular area (polygon) of a displayable image to be produced, and calculates an inner product of a normal vector and light source vector from an attribute of an object and data of a light source, respectively. From the CPU 101, the vertex coordinate of the triangular area and a color information (Rg, Gg, Bg, Ag) of three vertexes of the triangle are delivered to a graphic processor (GPU) 106 as the image composing apparatus.

Further, the CPU 101 acquires control information from an input device 104 such as an input pad, joystick, etc. via an interface (I/F) 103 and main bus 109. Based on the control information thus acquired, the CPU 101 supplies a three-dimensional image information stored in a main memory 102 to the graphic processor (GPU) 106 over the main bus 109.

The graphic processor (GPU) 106 is provided to transform the three-dimensional image information supplied from the CPU 101 to an image data. It incorporates the aforementioned image composing apparatus. Thus, a three-dimensional image produced from the image data generated in the graphic processor (GPU) 106 is written into a video memory 105.

The three-dimensional image data written in the video memory 105 is read during scanning of a video signal, and displayed as a three-dimensional image on a TV monitor (not illustrated) or the like.

On the other hand, an audio or sound information corresponding to the three-dimensional image displayed and included in a scanned information extracted by the CPU 101 is supplied to an audio processor 107 which will deliver, based on the audio information supplied from the CPU 101, an audio data stored in an audio memory 108 as a sound from a speaker (not illustrated).

According to the above disclosure, an image comprising method and apparatus, and an information processing system, are provided in which a portion of an original image having a clear color is extracted as a key signal, the key signal is also subjected to a same image processing as for the original image, and the key signal is used in mixing the original images to form a composite image, so that no such an additional special information as the alpha information is required and the composite image thus obtained will not be deteriorated in quality even if the original image is subjected to the image processing.

6

**Claims**

1. An image composing method in which a first image and a second image are mixed using a key information to compose a new image, comprising:

   a key information generating step of generating a key information from a specific color of the first original image;
   a first image processing step of subjecting the first original image to a predetermined image processing;
   a second image processing step of subjecting the generated key information to the same predetermined image processing; and
   an image mixing step of mixing the processed first image and the second original image together using the processed key information.

2. The method as set forth in Claim 1, wherein the specific color is black.

3. The method as set forth in Claim 1, wherein the image processing is a low-pass filtering.

4. An image composing apparatus in which a first image and a second image are mixed using a key information to compose a new image, comprising:

   means for generating a key information from a specific color of the first original image;
   means for subjecting the first original image and the generated key information to a same predetermined image processing; and
   means for mixing the processed first image and the second original image together using the processed key information.

5. The apparatus as set forth in Claim 4, wherein the image processing means subjects the first original image and generated key information to a low-pass filtering.

6. The apparatus as set forth in Claim 4, wherein the key information generating means takes black as the specific color.

7. An information processing system in which an image data is generated based on a control information supplied from an input device and displayed as an image on a display unit, comprising:

   means for generating a key information from a specific color of a first original image;
   means for subjecting the first original image and generated key information to a same predetermined image processing; and
   means for mixing the processed first original image and a second original image together using the processed key information.

8. The system as set forth in Claim 7, wherein the image processing means subjects the first original image and generated key information to a low-pass filtering.

9. The system as set forth in Claim 7, wherein the key information generating means takes black as the specific color.

**Patentansprüche**

1. Bildzusammensetzungsverfahren, bei dem ein erstes Bild und ein zweites Bild unter Verwendung einer Schlüsselinformation gemischt werden, um ein neues Bild zusammenzusetzen, mit:

   einem Schlüsselinformations-Erzeugungsschritt zum Erzeugen einer Schlüsselinformation von einer spezifischen Farbe des ersten originalen Bildes,
   einem ersten Bildverarbeitungsschritt zum Unterwerfen des ersten originalen Bildes einer vorbestimmten Bildverarbeitung,
   einem zweiten Bildverarbeitungsschritt zum Unterwerfen der erzeugten Schlüsselinformation der gleichen vorbestimmten Bildverarbeitung, und
   einem Bildmischschritt zum Zusammenmischen des verarbeiteten ersten Bildes und des zweiten originalen Bildes unter Verwendung der verarbeiteten Schlüsselinformation.

2.  Verfahren nach Anspruch 1, wobei die spezifische Farbe schwarz ist.

3.  Verfahren nach Anspruch 1, wobei die Bildverarbeitung eine Tiefpassfilterung ist.

4.  Bildzusammensetzungsgerät, bei dem ein erstes Bild und ein zweites Bild unter Verwendung einer Schlüsselinformation gemischt werden, um ein neues Bild zusammenzusetzen, mit:

    einer Einrichtung zum Erzeugen einer Schlüsselinformation von einer spezifischen Farbe des ersten originalen Bildes,
    einer Einrichtung zum Unterwerfen des ersten originalen Bildes und der erzeugten Schlüsselinformation der gleichen vorbestimmten Bildverarbeitung, und
    einer Einrichtung zum Zusammenmischen des verarbeiteten ersten Bildes und des originalen zweiten Bildes unter Verwendung der verarbeiteten Schlüsselinformation.

5.  Gerät nach Anspruch 4, wobei die Bildverarbeitungseinrichtung das erste originale Bild und die erzeugte Schlüsselinformation einer Tiefpassfilterung unterwirft.

6.  Gerät nach Anspruch 4, wobei die Schlüsselinformations-Erzeugungseinrichtung Schwarz als die spezifische Farbe nimmt.

7.  Informationsverarbeitungssystem, bei dem Bilddaten auf der Basis einer von einer Eingabeeinrichtung zugeführten Steuerinformation erzeugt und auf einer Anzeigeeinheit als ein Bild angezeigt werden, mit:

    einer Einrichtung zum Erzeugen einer Schlüsselinformation von einer spezifischen Farbe eines ersten originalen Bildes,
    einer Einrichtung zum Unterwerfen des ersten originalen Bildes und der erzeugten Schlüsselinformation der gleichen vorbestimmten Bildverarbeitung, und
    einer Einrichtung zum Zusammenmischen des verarbeiteten ersten originalen Bildes und eines zweiten originalen Bildes unter Verwendung der verarbeiteten Schlüsselinformation.

8.  System nach Anspruch 7, wobei die Bildverarbeitungseinrichtung das erste originale Bild und die erzeugte Schlüsselinformation einer Tiefpassfilterung unterwirft.

9.  System nach Anspruch 7, wobei die Schlüsselinformations-Erzeugungseinrichtung Schwarz als die spezifische Farbe nimmt.


**Revendications**

1.  Procédé de composition d'image selon lequel une première image et une seconde image sont mélangées en utilisant une information clé afin de composer une nouvelle image, comprenant :

    une étape de génération d'information clé permettant de générer une information clé à partir d'une couleur spécifique de la première image originale ;
    une première étape de traitement d'image permettant de soumettre la première image originale à un traitement d'image prédéterminé ;
    une seconde étape de traitement d'image permettant de soumettre l'information clé générée au même traitement d'image prédéterminé ; et
    une étape de mélange d'image permettant de mélanger la première image traitée et la seconde image originale ensemble en utilisant l'information clé traitée.

2.  Procédé selon la revendication 1, dans lequel la couleur spécifique est le noir.

3.  Procédé selon la revendication 1, dans lequel le traitement d'image est un filtrage passe-bas.

4.  Appareil de composition d'image selon lequel une première image et une seconde image sont mélangées en utilisant une information clé afin de composer une nouvelle image, comprenant :

un moyen pour générer une information clé à partir d'une couleur spécifique de la première image originale ;

un moyen pour soumettre la première image originale et l'information clé générée à un même traitement d'image prédéterminé ; et

un moyen pour mélanger la première image traitée et la seconde image originale ensemble en utilisant l'information clé traitée.

**5.** Appareil selon la revendication 4, dans lequel le moyen de traitement d'image soumet la première image originale et l'information clé générée à un filtrage passe-bas.

**6.** Appareil selon la revendication 4, dans lequel le moyen de génération d'information clé prend le noir en tant que couleur spécifique.

**7.** Système de traitement d'information dans lequel des données d'image sont générées sur la base d'une information de commande qui est appliquée depuis un dispositif d'entrée et sont affichées en tant qu'image sur une unité d'affichage, comprenant :

un moyen pour générer une information clé à partir d'une couleur spécifique de la première image originale ;

un moyen pour soumettre la première image originale et l'information clé générée à un même traitement d'image prédéterminé ; et

un moyen pour mélanger la première image traitée et une seconde image originale ensemble en utilisant l'information clé traitée.

**8.** Système selon la revendication 7, dans lequel le moyen de traitement d'image soumet la première image originale et l'information clé générée à un filtrage passe-bas.

**9.** Système selon la revendication 7, dans lequel le moyen de génération d'information clé prend le noir en tant que couleur spécifique.

**FIG.1**

21 FIRST IMAGE

23c

(1, 0)  (0, 5)  (0, 0)

23a

23  23b

ALPHA INFORMATION

24a  24c  24b

24  COMPOSITE IMAGE

22 SECOND IMAGE

# FIG.2

FIG.3

(PREDETERMINED COLOR)

41b

41a

41 FIRST IMAGE

EXTRACTION OF KEY SIGNAL

(1, 0)

(0, 0)

43

43a

KEY SIGNAL

44 COMPOSITE IMAGE

42

42b

SECOND IMAGE

**FIG.4**

*41* FIRST IMAGE

*42* SECOND IMAGE

SPECIFIC
COLOR
IDENTIFY *51*

*43* KEY SIGNAL

IMAGE
MIXING *53*

*44* COMPOSITE IMAGE

# FIG.5

(SPECIFIC COLOR)  (SPECIFIC COLOR)

*61* FIRST IMAGE

EXTRACTION OF KEY SIGNAL

(1, 0)

(0, 0)  (0, 0)

*63* KEY SIGNAL

*62* SECOND SIGNAL

*64a* (BACK GROUND)  (FORE GROUND)  *64c*  *64b* (BACK GROUND)

*64* COMPOSITE IMAGE

# FIG.6

FIG.7

*61* FIRST ORIGINAL
IMAGE

*72* SECOND ORIGINAL
IMAGE

*81*

SPECIFIC
COLOR
IDENTIFY

*82*

IMAGE
PROCESSING

FIRST
*73* KEY SIGNAL    *71* PROCESSED
IMAGE

*83*

IMAGE
MIXING

*74* COMPOSITE IMAGE

# FIG.8

FIG.9

*91* FIRST IMAGE           *92* SECOND IMAGE

*101*

SPECIFIC
COLOR
IDENTIFY

*93* KEY SIGNAL

*102*

IMAGE
PROCESSING

*93a* PROCESSED
KEY SIGNAL

*91a* PROCESSED
FIRST IMAGE

IMAGE
MIXING    *103*

*94* COMPOSITE IMAGE

*106*
IMAGE COMPOSER
(GRAPHIC PROCESSOR)

# FIG.10A

**FIG.10B**